# EUROPÄISCHE PATENTSCHRIFT

(11) **EP 2 943 377 B1**
(45) Veröffentlichungstag und Bekanntmachung des Hinweises auf die Patenterteilung: **02.10.2019**
(21) Anmeldenummer: 13827000.4
(22) Anmeldetag: 19.12.2013
(51) Int. Cl.: B60S 1/08

(54) **BELEUCHTUNG ZUR DETEKTION VON REGENTROPFEN AUF EINER SCHEIBE MITTELS EINER KAMERA**
ILLUMINATION FOR THE DETECTION OF RAINDROPS ON A WINDOW BY MEANS OF A CAMERA
ÉCLAIRAGE POUR DÉTECTER DES GOUTTES DE PLUIE SUR UNE VITRE AU MOYEN D'UNE CAMÉRA

(30) Priorität: 11.01.2013 DE 102013100292
(43) Veröffentlichungstag der Anmeldung: 18.11.2015
(73) Patentinhaber: Conti Temic Microelectronic GmbH, 90411 Nürnberg (DE)
(72) Erfinder: KRÖKEL, Dieter, 88097 Eriskirch (DE); FEY, Wolfgang, 88131 Bodolz (DE); RANDLER, Martin, 88090 Immenstaad (DE)
(86) Internationale Anmeldenummer: PCT/DE2013/200377
(87) Internationale Veröffentlichungsnummer: WO 2014/108123

(56) Entgegenhaltungen:
- EP-A1- 2 062 777
- EP-A2- 1 580 092
- WO-A1-2012/092911
- WO-A1-2013/091619
- US-B1- 6 555 804

## Beschreibung

Die Erfindung betrifft eine Vorrichtung zur Erkennung von Regen auf einer Scheibe mittels einer Beleuchtungsquelle und einer Kamera.

In der US 7,259,367 B2 wird mittels einer Kamera eine Regensensierung vorgeschlagen, die eine großflächige Beleuchtung des Durchtrittsfensters des Kameraöffnungswinkels mit der Scheibe durch eine Infrarotdiode vorsieht. Die Kamera ist nahezu auf unendlich fokussiert und damit gleichzeitig für Fahrerassistenzapplikationen nutzbar. Wegen der Abbildung auf den Fernbereich sind Regentropfen nur als Störungen im Bild bemerkbar, die durch aufwendige Differenzmessungen der mit in Synchronisation des Pixeltaktes gepulsten oder modulierten Infrarotlichtes aufgenommen Bildern detektiert werden.

In der WO 2012/092911 A1 werden eine Vorrichtung und ein Verfahren zur Erkennung von Regen beschrieben. Eine Kamera ist hinter einer Scheibe angeordnet, insbesondere im Inneren eines Fahrzeugs hinter einer Windschutzscheibe, und auf einen Fernbereich fokussiert, der vor der Scheibe liegt. Eine Beleuchtungsquelle zur Erzeugung mindestens eines auf die Scheibe gerichteten Lichtstrahls richtet den mindestens einen Lichtstrahl derart auf die Scheibe, dass mindestens ein von der Außenseite der Scheibe reflektierter Strahl als äußerer Lichtreflex bzw. Außenreflex auf die Kamera auftrifft. Die Lichtmenge des mindestens einen auf die Kamera auftreffenden Strahls bzw. Lichtreflexes kann von der Kamera gemessen werden kann. Dabei kann die Beleuchtungsquelle Licht im sichtbaren Wellenlängenbereich erzeugen. Dabei muss darauf geachtet werden, dass Verkehrsteilnehmer nicht durch die Beleuchtung gestört werden. Dazu kann Intensität und Dauer der Beleuchtung an die äußere Helligkeit angepasst werden.

Allerdings wird eine Beleuchtung mit sichtbarem Licht, auch wenn sie den Beleuchtungsrichtlinien für Fahrzeuge entspricht, als störend empfunden. Andere Verkehrsteilnehmer, insbesondere Passanten, könnten von einer derartigen Beleuchtung gestört werden, wenn sie diese wahrnehmen.

Die nachveröffentlichte WO 2013/09169 A1 zeigt eine Vorrichtung zur Ermittlung von Feuchtigkeit auf einer Fahrzeugscheibe, die eine Kameravorrichtung und eine Strahlungsquelle zur Ausgabe optischer Strahlung, beispielsweise eine LED, auf die Windschutzscheibe aufweist. Die Strahlungsquelle kann innerhalb einer Aussparung einer Streulichtblende der Kameravorrichtung auf einer Leiterplatte angeordnet sein.

Aufgabe der vorliegenden Erfindung ist es, die genannten Schwierigkeiten der aus dem Stand der Technik bekannten Vorrichtungen zu überwinden und eine optimierte Beleuchtung für eine kamerabasierte Regenerkennung anzugeben.

Die Erfindung basiert auf den folgenden Grundüberlegungen: Eine Beleuchtung im sichtbaren Wellenlängenbereich bietet den Vorteil, dass übliche Fahrerassistenzkameras mit Farbauflösung diesen Spektralbereich vollständig erfassen können, während dagegen infrarotes Licht in aller Regel die zur optimierten Farbauflösung üblichen Infrarotsperrfilter nicht passiert und somit von diesen Fahrerassistenzkameras nicht detektiert werden kann. Bei einer Beleuchtungsgeometrie, bei der die Beleuchtung Licht in einem breiten Abstrahlwinkel erzeugt, ist die Lichtaustrittsfläche aufgrund des breiten Abstrahlwinkels insbesondere seitlich sichtbar. Dadurch können andere Verkehrsteilnehmer, z.B. Passanten, die sich seitlich neben einem Fahrzeug in Höhe der Windschutzscheibe befinden, irritiert werden.

Eine erfindungsgemäße Vorrichtung zur Erkennung von Regen umfasst eine Kamera und eine Beleuchtungsquelle zur Emission von sichtbarem Licht auf eine Scheibe. Die Kamera und die Beleuchtungsquelle sind derart ausgebildet und angeordnet, dass die Kamera ein Signal vom sichtbaren Licht erfassen kann, das die Beleuchtungsquelle auf die Scheibe emittiert. Insbesondere korreliert dabei das von der Kamera detektierte Signal mit an der Scheibeninnen- bzw. -außenseite und/oder am Regentropfen reflektierten bzw. gestreuten sichtbarem Licht der Beleuchtungsquelle. Das sichtbare Licht durchquert eine Blendenvorrichtung, die bewirkt, dass das Licht in einer vorgegebenen Richtung senkrecht zur Beleuchtungsrichtung von Strukturen der Blendenvorrichtung abgeblockt oder stark abgeschwächt wird. Eine starke Abschwächung liegt insbesondere vor, wenn sich maximal 10% der Lichtmenge ohne Blendenvorrichtung in der abgeblockten Richtung ausbreiten können. Dagegen kann sich das Licht in der Richtung senkrecht zur vorgegebenen Richtung und zur Beleuchtungsrichtung praktisch ungehindert durch die Blendenvorrichtung hindurch ausbreiten. Die Blendenvorrichtung wirkt bevorzugt wie eine Jalousie. Sie lässt in einer vorgegebenen Richtung das Licht sehr gut passieren, während das Licht quer zu dieser Richtung von Lamellen der Jalousie abgeblockt wird.

Mit anderen Worten ist die Blendenvorrichtung zwischen der Beleuchtungsquelle und der Außenseite der Scheibe angeordnet und bewirkt den bereits erläuterten Effekt, dass die Ausbreitung des Lichts in einer vorgegebenen transversalen Richtung vermindert bzw. verhindert wird und zwar bevorzugt in dieser transversalen Richtung zu beiden Seiten hin (also in positiver wie in negativer Richtung).

Dies bietet den Vorteil, dass die Richtung, unter der das sichtbare Licht von der Beleuchtungsquelle aus der Scheibe austreten kann, kontrolliert werden kann und somit eine Störung von Objekten und Personen, die sich außerhalb der Scheibe (z.B. seitlich) befinden, verhindert werden kann.

Die Kamera umfasst bevorzugt einen Bildsensor, z.B. einen CCD- oder CMOS-Sensor, und ein Objektiv bzw. Abbildungssystem zur Fokussierung von elektromagnetischer Strahlung aus einem oder mehreren Bereichen auf den Bildsensor.

Die Beleuchtungsquelle kann als eine oder mehrere Leuchtdioden (LEDs) oder als ein Lichtband ausgebildet sein. Vorteilhaft erzeugt die Beleuchtungsquelle eine flächige Beleuchtung.

Bevorzugt wird Regen auf der Außenseite der Scheibe erkannt, indem die Kamera hinter der Scheibe angeordnet und auf einen Fernbereich vor der Scheibe fokussiert wird.

Vorteilhaft wird von der Beleuchtungsquelle mindestens ein Lichtstrahl erzeugt und so auf die Scheibe gerichtet, dass mindestens ein von der Außenseite der Scheibe reflektierter Strahl auf die Kamera auftrifft.

Bevorzugt wird der bzw. die Lichtreflex(e) des mindestens einen von der Außenseite der Scheibe reflektierten Strahls mittels der Kamera gemessen und der/die gemessene(n) Lichtreflex(e) des mindestens einen von der Außenseite der Scheibe reflektierten Strahls zur Detektion von Regen auf der Außenseite der Scheibe ausgewertet.

Gemäß einer vorteilhaften Ausführungsform ist die Scheibe die Windschutzscheibe eines Fahrzeugs und die vorgegebene (Abblock-)Richtung ist senkrecht zur Beleuchtungsrichtung und senkrecht zur Fahrzeuglängsrichtung bzw. entspricht der Fahrzeugquerrichtung. Dadurch kann eine Blendung oder Irritation anderer Verkehrsteilnehmer, insbesondere Passanten, die sich seitlich neben dem Fahrzeug in Höhe der Windschutzscheibe befinden, vermieden werden.

Gemäß der Erfindung umfasst oder ist die Blendenvorrichtung ein Gitter, welches Lamellen als Strukturen umfasst.

Vorteilhaft umfasst die Kamera einen Sichttrichter bzw. eine Sichtblende bzw. eine Streulichtblende, welche insbesondere das Sichtfeld der Kamera (nach unten) begrenzt und idealerweise Stör- und Streulichtreflexe minimiert. Die Blendenvorrichtung ist am Sichttrichter angeordnet oder in den Sichttrichter integriert ist. Um eine kompakte Bauweise der Kamera mit integrierter Beleuchtung zu erzielen, kann die Beleuchtungsquelle bevorzugt unter dem Sichttrichter angeordnet sein. Damit das Licht aus der Beleuchtungsquelle auf die Scheibe treffen kann, ist der Sichttrichter bevorzugt in dem Bereich, durch den der Lichtstrahl aus der Beleuchtungsquelle zur Scheibe tritt, für sichtbares Licht durchlässig ausgebildet. Hierzu kann vorteilhaft die Blendenvorrichtung derart in den Sichttrichter integriert sein, dass sie in diesem Bereich den Sichttrichter "ersetzt". Alternativ kann der Sichttrichter einen Bereich aus lichtdurchlässigem Material aufweisen und die Blendenvorrichtung kann z.B. darunter oder darauf angeordnet sein.

Bevorzugt sind die Strukturen der Blendenvorrichtung parallel zueinander angeordnet, wobei sie zusätzlich jeweils identische Abstände zueinander aufweisen können (äquidistant angeordnet).

In einer alternativen vorteilhaften Ausführungsform können die Strukturen der Blendenvorrichtung, die im oder am Sichttrichter angeordnet ist, an die Geometrie der Oberfläche des Sichttrichters angepasst angeordnet sein. Die Oberfläche eines Sichttrichters ist meistens nicht rechteckig, sondern symmetrisch trapezförmig. Daher können die Strukturen vorteilhaft nicht exakt parallel angeordnet sein, sondern derart, dass sie den Sichttrichter in Sichtrichtung in gleichgroße Flächen bzw. Bahnen unterteilen.

Bevorzugt können benachbarte Strukturen der Blendenvorrichtung einen Abstand kleiner als 100µm aufweisen, also im Mikrometerbereich. Gitter mit dieser Strukturgröße (Lamellenbreite z.B. ca. 15pm) gibt es bereits z.B. als Sichtschutzfilter für Computerdisplays, sie können vorteilhaft als dünne Folien hergestellt werden.

Alternativ können benachbarte Strukturen der Blendenvorrichtung vorteilhaft einen Abstand im Bereich von 0.1mm bis 1mm aufweisen, also im Millimeterbereich. Der Vorteil größerer Strukturen besteht darin, dass sie mit Hilfe von Spritzgusstechnologie herstellbar sind. Die Herstellung des Gitters kann dann sogar vorteilhaft mit dem Herstellprozess eines Lichtleiters, der ebenfalls in Spritzgusstechnologie herstellbar ist, in einem Zweikomponenten-Spritzgussverfahren vereint werden.

Die erforderliche Höhe des Gitters bzw. der Blendenvorrichtung ergibt sich aus einfachen geometrischen Überlegungen zur Strukturbreite und Lamellenhöhe. So würde z.B. bei einem Verhältnis von Strukturbriete zur Lamellenhöhe von 1:1 bei unendlich dünnen Lamellen mit Absorptionsgrad 1 der seitliche Abstrahlwinkel quer zur Lamellenstruktur auf 45° beschränkt werden. Diese seitliche Abstrahlbeschränkung ist für den angedachten Zweck der optischen Störunderdrückung bereits völlig ausreichend.

Vorteilhaft ist daher die Höhe der Strukturen etwa gleich dem Abstand der Strukturen der Blendenvorrichtung.

Gemäß einer vorteilhaften Ausführungsform ist die Blendenvorrichtung derart ausgebildet, dass der Abstand benachbarter Strukturen bzw. die Breite der einzelnen Strukturen periodisch variiert. Dadurch wird eine räumliche Modulation der Beleuchtung erzielt.

In einer bevorzugten Ausführungsform ist ein Lichtleiter auf der Beleuchtungsquelle angeordnet.

Vorteilhaft ist dann die Blendenvorrichtung auf dem Lichtleiter angeordnet.

Im Folgenden wird die Erfindung anhand von Figuren und Ausführungsbeispielen näher erläutert.

Es zeigen:
Fig. 1 schematisch das Grundprinzip einer möglichen Anordnung von Beleuchtungsquelle und Kamera mit Strahlengängen bei Regen auf der Scheibe (Längsschnitt);
Fig. 2 von einem Bildsensor der Kamera detektierte Signale, die auf Regen schließen lassen;
Fig. 3 eine Kamera mit LED zur Beleuchtung (Längsschnitt)
Fig. 4 Aufsicht des Sichttrichters mit vier darunter liegenden LEDs in Reihe und
Fig. 5 Gitter, Lichtleiter und LEDs in Draufsicht und im Querschnitt.

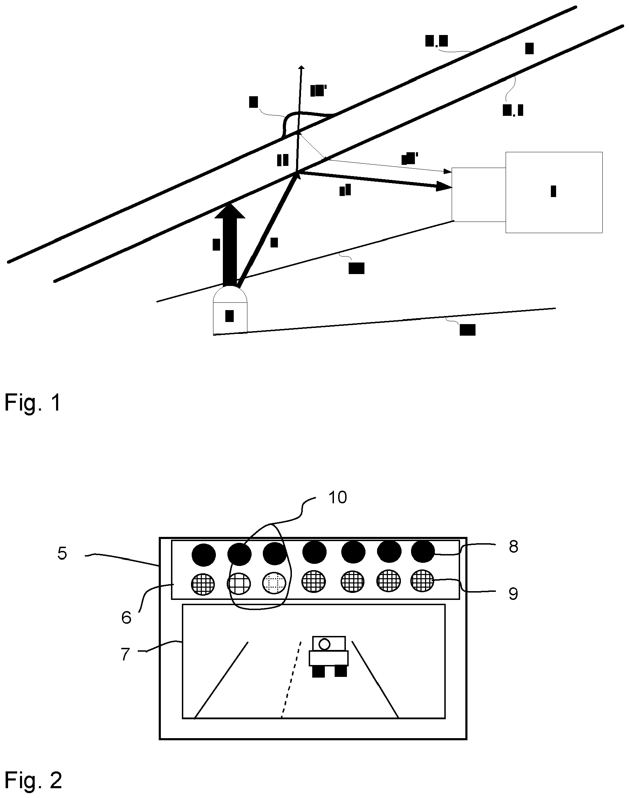

Fig. 1 zeigt im Längsschnitt eine auf den Fernbereich fokussierte Kamera (1) und eine Beleuchtungsquelle (3), die Licht (h, n) im sichtbaren Wellenlängenbereich auf eine Scheibe (2) ausstrahlt. Die nachfolgend erläuterten Strahlenverläufe (h, n, t1, r1, t2', r2') sind schematisch dargestellt. Vom Hauptstrahl (h) der Beleuchtung gelangt kein Reflex zur Kamera (1). Der Öffnungswinkel der Beleuchtung ist so groß, dass von einem Nebenstrahl (n) an der Innen-(2.1) und Außenseite (2.2) der Scheibe reflektierte Strahlen als zwei räumlich getrennte Strahlen (r1, r2') auf das Objektiv bzw. die Kamera (1) auftreffen. Wegen der Fokussierung auf den Fernbereich ist die Umrandung der Strahlenbündel nur unscharf auf den Bildchip (5) abgebildet. Beide Strahlen (r1, r2') sind ausreichend getrennt und ihre jeweiligen Lichtreflexe sind mit dem Bildsensor (5) messbar.

Der an der Luft-Scheibe-Grenzfläche (bzw. Scheibeninnenseite (2.1)) reflektierte Anteil (r1) des Nebenstrahls (n) kann als Referenzstrahl dienen. Vom Anteil, der in die Scheibe transmittiert (t1) wird, dient der Anteil als Messstrahl (r2'), der an der Scheibe-Regentropfen-Grenzfläche (bzw. Scheibenaußenseite (2.2)) reflektiert wird und auf die Kamera (1) trifft. Nicht dargestellt ist der Anteil des Strahls, der mehrfach innerhalb der Scheibe (2) reflektiert wird (an der Innenseite (2.1) Scheibe-Luft, nachdem er an der Außenseite (2.2) Scheibe-Regentropfen reflektiert wurde) .

Wenn wie hier dargestellt im Regenfall (4) die Außenseite (2.2) der Windschutzscheibe (2) benetzt ist, wird ein Großteil (t2') des durch die Innenseite (2.1) in die Scheibe transmittierten Lichts (t1) ausgekoppelt, so dass der reflektierte Anteil (r2') schwächer ist als er es bei einer trockenen Scheibe ist (nicht dargestellt). Der von der Innenseite (2.1) reflektierte Strahl (r1) ist von einer Benetzung der Scheibenaußenseite (2.2) unbeeinflusst.

Durch den Vergleich der gemessenen Lichtreflexe beider Strahlen (r1 zu r2') kann so leicht das im Regenfall (4) verminderte Signal (r2') gemessen werden und ein Scheibenwischer entsprechend angesteuert werden.

Die Beleuchtungsquelle (3) mit einem weiten Abstrahlwinkel kann bei der vorliegenden Anordnung in die Kamera (1), genauer in das Kameragehäuse integriert werden kann, z.B. wie dargestellt auf einer Leiterplatte (16) des Kameramoduls platziert.

Die Beleuchtungsquelle (3) ist hier unterhalb einer Sichtblende bzw. eines Sichttrichters (14) angeordnet. Der Sichttrichter (14) ist in dem Bereich, durch den der Lichtstrahl (n) aus der Beleuchtungsquelle (3) zur Scheibe (2) tritt, für sichtbares Licht durchlässig.

Bei Vorliegen von einem oder mehreren Regentropfen (4) auf der Außenseite (2.2) der Scheibe (2) bewirkt der bzw. die Regentropfen (4) eine stärkere Auskopplung (t2') von Licht aus der Scheibe in den Bereich vor der Scheibe. Dadurch wird von der Kamera (1) eine verringerte Intensität des Teilstrahls (r2') gemessen, der an der Außenseite (2.2) der Scheibe (2) reflektiert wurde.

Da die Beleuchtungsquelle (3) sichtbares Licht (h, n) in einem breiten Abstrahlwinkel erzeugt, ist die Lichtaustrittsfläche aufgrund des breiten Abstrahlwinkels insbesondere seitlich, gemeint ist hierbei senkrecht zur Längsschnittebene der Fig. 1, sichtbar. Dadurch können andere Verkehrsteilnehmer, z.B. Passanten, die sich seitlich neben einem Fahrzeug in Höhe der (Windschutz-)Scheibe befinden, irritiert werden.

Fig. 2 zeigt im oberen Teil (6) des Bildsensors (5), der der Regenerkennung dient, jeweils sieben Paare von Beleuchtungsreflexen (8, 9), die z.B. von sieben LEDs als Beleuchtungsquelle (3) erzeugt werden. Diese sind aufgrund der auf unendlich fokussierten Kamera (1) nicht scharf abgebildet aber wahrnehmbar. Insbesondere kann die Lichtintensität bzw. -menge gemessen werden. Die oberen Beleuchtungsreflexe (8) werden von an der Innenseite (2.1) der Windschutzscheibe (2) reflektierten Strahlen (r1) erzeugt, die unteren (9) von an der Außenseite (2.2) der Windschutzscheibe reflektierten Strahlen (r2') erzeugt.

Fig. 2 zeigt somit eine beispielhafte Aufteilung des Fahrerassistenzbereiches (7) und des Regensensorbereiches (6) auf dem Bildchip (5). Beide Bereiche detektieren Licht (elektromagnetische Strahlung) im sichtbaren Wellenlängenbereich und überlagern sich typischerweise im Regensensorbereich (6). Die Beleuchtungsreflexe von der äußeren Windschutzscheibe (9), über denen ein Regentropfen (4) liegt, sind in der Intensität abgeschwächt. Diese Beleuchtungsreflexe (9) stammen von an der Außenseite (2.2) der Windschutzscheibe (2) reflektierten Strahlen (r2') und sind von verringerter Intensität, weil ein Großteil des in die Windschutzscheibe (2) transmittierten Strahls (t1) durch Regentropfen (4) aus der Windschutzscheibe ausgekoppelt (t2') und somit nicht zurück zur Kamera (1) reflektiert (r2') wird. Diese Beleuchtungsreflexe (9) tragen also die Information in sich, ob Regen (4) auf der Außenseite (2.2) der Scheibe (2) vorliegt, und deren Lichtmenge bzw. -verteilungsmuster könnte alleine als Messsignal verwendet werden.

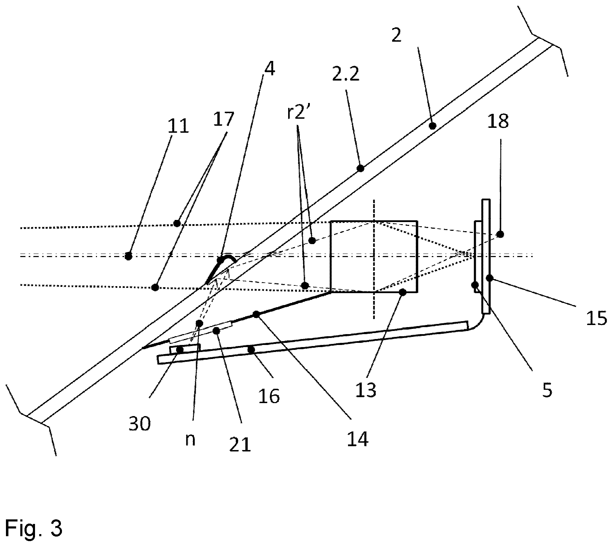

Ein Ausführungsbeispiel der Erfindung ist in Fig. 3 als Längsschnitt dargestellt. Die grundsätzliche Anordnung und Auslegung von Beleuchtungsquelle (3), Scheibe (2) und Kamera (1) entspricht hierbei der in Fig. 1 dargestellten Anordnung. Die hier dargestellte Kamera (1) umfasst einen Bildsensor (5), zwei Leiterplatten (15, 16), ein Objektiv bzw. Abbildungssystem (13) und einen Sichttrichter (14). Der Bildsensor (5) ist auf einer ersten Leiterplatte (15) angeordnet, die mit einer zweiten Leiterplatte (16) verbunden ist. Der Sichttrichter (14) begrenzt das Sichtfeld der Kamera (1).

Anhand der schematischen Darstellung von Fig. 3 ist ersichtlich wie der Fernbereich durch das Abbildungssystem (13) bzw. Objektiv fokussiert auf dem Bildsensor (5) der Kamera (1) abgebildet wird. Der Strahlengang der Fernbereichsabbildung (17) ist schematisch durch gepunktete Linien dargestellt. Der Strahlengang (n, r2') der Beleuchtungs- bzw. Nahbereichsabbildung ist schematisch durch gestrichelte Linien dargestellt. Der Fokuspunkt (18) der Abbildung der an der Scheibenaußenseite (2.2) reflektierten Beleuchtungsstrahlen (r2') liegt hinter dem Bildsensor (5). Daher sind diese Beleuchtungsreflexe (9) im Kamerabild unscharf.

Als Beleuchtungsquelle (3) dient bei diesem Ausführungsbeispiel eine Mehrzahl von Leuchtdioden (LEDs) (30), die in einer Reihe liegend auf der zweiten Leiterplatte (16) angeordnet sind. Vor den LEDs (30) ist als Blendenvorrichtung (20) ein Gitter aufgebracht. Das Gitter ist hierbei in den Sichttrichter (14) integriert. Die Lamellen (21) des Gitters (20) sind derart ausgebildet und angeordnet, dass kein oder nur wenig Licht von den LEDs (30) senkrecht zu der Ebene, die dem dargestellten Längsschnitt entspricht, aus der Kamera (1) bzw. aus der Scheibe (2) heraustreten kann. Dazu können die Gitterlamellen (21) beispielsweise parallel zur strichpunktiert dargestellten optischen Achse (11) der Kamera (1) angeordnet sein.

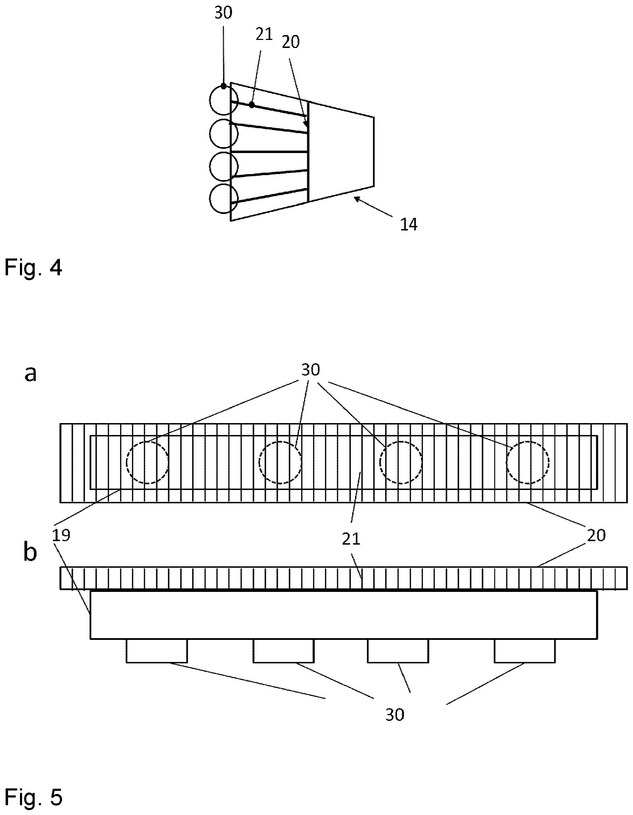

Fig. 4 zeigt eine Aufsicht eines Sichttrichters (14) mit vier darunter liegenden LEDs (30), die in einer Reihe angeordnet sind. Auch hier ist als Blendenvorrichtung (20) ein Gitter vorgesehen, das in den Sichttrichter (14) integriert ist. Als Blendenstrukturen (21) sind wiederum Lamellen vorgesehen, die nun jedoch nicht exakt parallel zueinander bzw. zur optischen Achse ausgerichtet angeordnet sind, sondern an die Geometrie der Oberfläche des Sichttrichters (14) angepasst sind. Auch diese Lamellenanordnung bewirkt, dass das Licht senkrecht zur optischen Achse (11), also in Fig. 4 nach oben und unten, von den Lamellen (21) des Gitters (20) abgeblockt wird. Dagegen ermöglichen die Gitterlamellen (21) den Durchtritt des von den LEDs (30) erzeugten sichtbaren Lichts (n) durch den Sichttrichter (14) auf die Scheibe (2).

Fig. 5 zeigt schließlich eine alternative Ausführungsform einer Beleuchtungsquelle (3) mit Leuchtdioden (30), Lichtleiter (19) und Gitter (20). Fig. 5a zeigt die Draufsicht und Fig. 5b den Querschnitt dieser Anordnung. Auf den vier nebeneinander angeordneten Leuchtdioden (30) ist hierbei ein Lichtleiter (19) angeordnet. Auf dem Lichtleiter befindet sich das Gitter als Blendenstruktur (20). Die Lamellen (21) des Gitters (20) sind hierbei parallel zueinander angeordnet und sind bevorzugt parallel zur optischen Achse (11) der Kamera (1) ausgerichtet.

Die Lamellen (21) bzw. das Gitter (20) sind beispielsweise mittels Spritzgusstechnologie herstellbar. Die Herstellung des Gitters (20) kann dann sogar vorteilhaft mit dem Herstellprozess des Lichtleiters (19), der ebenfalls in Spritzgusstechnologie herstellbar ist, in einem Zweikomponenten-Spritzgussverfahren vereint werden.

### Bezugszeichenliste

- 1: Kamera
- 2: Scheibe
- 2.1: Innenseite der Scheibe
- 2.2: Außenseite der Scheibe
- 3: Beleuchtungsquelle
- 4: Regen, Regentropfen
- 5: Bildsensor
- 6: Regensensorbereich
- 7: Fahrerassistenzbereich
- 8: Beleuchtungsreflex von Scheibeninnenseite
- 9: Beleuchtungsreflex von Scheibenaußenseite
- 10: Signalveränderung bei Regentropfen
- 11: optische Achse
- 13: Abbildungssystem bzw. Objektiv
- 14: Sichttrichter
- 15: erste Leiterplatte
- 16: zweite Leiterplatte
- 17: Fernbereichsstrahlengang (Fahrzeugumfeld)
- 18: Fokuspunkt der Nahbereichsabbildung (Scheibenaußenseite)
- 19: Lichtleiter
- 20: Blendenvorrichtung bzw. Gitter
- 21: Blendenvorrichtungsstrukturen bzw. Gitterlamellen
- 30: LED
- h: Beleuchtungshauptstrahl
- n: Beleuchtungsnebenstrahl bzw. -strahlengang
- r1: Anteil von n, der an der Scheibeninnenseite reflektiert wird
- t1: Anteil von n, der an der Scheibeninnenseite transmittiert wird
- r2': Anteil von t1, der bei Regen an der Scheibenaußenseite reflektiert wird
- t2': Anteil von t1, der bei Regen an der Scheibenaußenseite transmittiert wird

## Patentansprüche

1. Vorrichtung zur Erkennung von Regen (4) umfassend
- eine Kamera (1),
- eine Beleuchtungsquelle (3, 30) zur Emission von sichtbarem Licht (h, n) auf eine Scheibe (2),
- wobei die Kamera und die Beleuchtungsquelle derart ausgebildet und angeordnet sind, dass die Kamera ein Signal vom sichtbaren Licht (r1, r2') erfassen kann, das die Beleuchtungsquelle auf die Scheibe (2) emittiert,
- wobei das sichtbare Licht eine Blendenvorrichtung (20) durchquert, die bewirkt, dass das Licht in einer vorgegebenen Richtung senkrecht zur Beleuchtungsrichtung von Strukturen (21) der Blendenvorrichtung (20) abgeblockt oder stark abgeschwächt wird,
**dadurch gekennzeichnet, dass**
die Blendenvorrichtung (20) ein Gitter ist, welches Lamellen als Strukturen (21) umfasst.

2. Vorrichtung nach Anspruch 1, wobei die Scheibe (2) die Windschutzscheibe eines Fahrzeugs ist und wobei die vorgegebene Richtung senkrecht zur Beleuchtungsrichtung und senkrecht zur Fahrzeuglängsrichtung ist.

3. Vorrichtung nach einem der vorhergehenden Ansprüche, wobei die Kamera (1) einen Sichttrichter (14) umfasst und die Blendenvorrichtung (20) am Sichttrichter angeordnet oder in den Sichttrichter integriert ist.

4. Vorrichtung nach einem der vorhergehenden Ansprüche, wobei die Strukturen (21) der Blendenvorrichtung (20) parallel zueinander angeordnet sind.

5. Vorrichtung nach Anspruch 5, wobei die Strukturen (21) der Blendenvorrichtung (20) an die Geometrie der Oberfläche des Sichttrichters (14) angepasst angeordnet sind.

6. Vorrichtung nach einem der vorhergehenden Ansprüche, wobei benachbarte Strukturen (21) der Blendenvorrichtung (20) einen Abstand kleiner 100 µm aufweisen.

7. Vorrichtung nach einem der Ansprüche 1 bis 5, wobei benachbarte Strukturen (21) der Blendenvorrichtung (20) einen Abstand im Bereich von 0.1mm bis 1mm aufweisen.

8. Vorrichtung nach einem der vorhergehenden Ansprüche, wobei die Höhe der Strukturen (21) etwa gleich dem Abstand der Strukturen der Blendenvorrichtung (20) ist.

9. Vorrichtung nach einem der vorhergehenden Ansprüche , wobei die Blendenvorrichtung (20) derart ausgebildet ist, dass der Abstand benachbarter Strukturen (21) und/oder die Breite der Strukturen periodisch variiert.

10. Vorrichtung nach einem der vorhergehenden Ansprüche, wobei ein Lichtleiter (19) auf der Beleuchtungsquelle (3, 30) angeordnet ist.

11. Vorrichtung nach Anspruch 10, wobei die Blendenvorrichtung (20) auf dem Lichtleiter (19) angeordnet ist.

## Claims

1. A device for detecting rain (4), comprising
- a camera (1),
- a lighting source (3, 30) for emitting visible light (h, n) onto a window (2),
- wherein the camera and the lighting source are configured and arranged such that the camera can detect a signal of the visible light (r1, r2') which the lighting source emits onto the window (2),
- wherein the visible light passes through a shutter device (20) which causes the light to be blocked or highly attenuated in a predefined direction perpendicular to the illumination direction of structures (21) of the shutter device (20),
**characterized in that**
the shutter device (20) is a grille which comprises slats as structures (21).

2. The device according to Claim 1, wherein the window (2) is the windshield of a vehicle and wherein the predefined direction is perpendicular to the illumination direction and perpendicular to the longitudinal direction of the vehicle.

3. The device according to any one of the preceding claims, wherein the camera (1) comprises a view funnel (14) and the shutter device (20) is arranged on the view funnel or is integrated into the view funnel.

4. The device according to any one of the preceding claims, wherein the structures (21) of the shutter device (20) are arranged parallel to one another.

5. The device according to Claim 5, wherein the structures (21) of the shutter device (20) are arranged in an adapted manner to the geometry of the surface of the view funnel (14).

6. The device according to any one of the preceding claims, wherein adjacent structures (21) of the shutter device (20) have a space of less than 100 µm.

7. The device according to any one of Claims 1 to 5,
wherein adjacent structures (21) of the shutter device (20) have a space in the range of 0.1 mm to 1 mm.

8. The device according to any one of the preceding claims, wherein the height of the structures (21) is approximately equal to the distance between the structures of the shutter device (20).

9. The device according to any one of the preceding claims, wherein the shutter device (20) is configured such that the spacing between adjacent structures (21) and/or the width of the structures varies periodically.

10. The device according to any one of the preceding claims, wherein a light guide (19) is arranged on the lighting source (3, 30).

11. The device according to Claim 10, wherein the shutter device (20) is arranged on the light guide (19).

## Revendications

1. Dispositif de détection de pluie (4), comprenant
- une caméra (1),
- une source d'éclairage (3, 30) pour l'émission d'une lumière visible (h, n) vers une vitre (2),
- où la caméra et la source d'éclairage sont prévues et disposées de telle manière que la caméra puisse détecter un signal de lumière visible (r1, r2') que la source d'éclairage émet vers la vitre (2),
- où la lumière visible traverse un dispositif de diaphragme (20) provoquant un blocage ou une forte atténuation de la lumière dans une direction définie perpendiculaire à la direction d'éclairage de structures (21) du dispositif de diaphragme (20),
**caractérisé en ce que**
le dispositif de diaphragme (20) est une grille comprenant des lamelles en tant que structures (21).

2. Dispositif selon la revendication 1, où la vitre (2) est le pare-brise d'un véhicule, et où la direction définie est perpendiculaire à la direction d'éclairage et perpendiculaire au sens de la longueur du véhicule.

3. Dispositif selon l'une quelconque des revendications précédentes, où la caméra (1) comprend une trémie de visée (14) et où le dispositif de diaphragme (20) est disposé contre la trémie de visée ou est intégré à la trémie de visée.

4. Dispositif selon l'une quelconque des revendications précédentes, où les structures (21) du dispositif de diaphragme (20) sont parallèles entre elles.

5. Dispositif selon la revendication 5, où les structures (21) du dispositif de diaphragme (20) sont disposées de manière ajustée à la géométrie de la surface de la trémie de visée (14).

6. Dispositif selon l'une quelconque des revendications précédentes, où des structures (21) contiguës du dispositif de diaphragme (20) présentent un espacement inférieur à 100 µm.

7. Dispositif selon l'une des revendications 1 à 5, où des structures (21) contiguës du dispositif de diaphragme (20) présentent un espacement compris entre 0,1 mm et 1 mm.

8. Dispositif selon l'une quelconque des revendications précédentes, où la hauteur des structures (21) est sensiblement égale à l'espacement des structures du dispositif de diaphragme (20).

9. Dispositif selon l'une quelconque des revendications précédentes, où le dispositif de diaphragme (20) est prévu de telle manière que l'espacement entre structures (21) contiguës et/ou la largeur des structures varient périodiquement.

10. Dispositif selon l'une quelconque des revendications précédentes, où un guide d'ondes lumineuses (19) est disposé sur la source d'éclairage (3, 30).

11. Dispositif selon la revendication 10, où le dispositif de diaphragme (20) est disposé sur le guide d'ondes lumineuses (19).
